# EUROPÄISCHE PATENTSCHRIFT

(11) **EP 1 954 439 B1**
(45) Veröffentlichungstag und Bekanntmachung des Hinweises auf die Patenterteilung: **12.08.2009**
(21) Anmeldenummer: 06828881.0
(22) Anmeldetag: 28.10.2006
(51) Int. Cl.: B23Q 1/66, B23Q 7/02, B23Q 7/14

(54) **WERKSTÜCKHALTEVORRICHTUNG UND DAMIT AUSGESTATTETE BEARBEITUNGSMASCHINE**
WORKHOLDING DEVICE AND PROCESSING MACHINE EQUIPPED WITH IT
DISPOSITIF PORTE-PIÈCE ET MACHINE D'USINAGE EQUIPÉE D'UN TEL DISPOSITIF

(30) Priorität: 26.11.2005 DE 102005056449
(43) Veröffentlichungstag der Anmeldung: 13.08.2008
(73) Patentinhaber: Alfing Kessler Sondermaschinen GmbH, 73433 Aalen (DE)
(72) Erfinder: SMOLAREK, Andreas, 73434 Aalen (DE)
(74) Vertreter: Bregenzer, Michael
(86) Internationale Anmeldenummer: PCT/EP2006/010393
(87) Internationale Veröffentlichungsnummer: WO 2007/059845

(56) Entgegenhaltungen:
- EP-A- 1 591 194
- EP-A2- 1 160 053
- WO-A-20/05053900
- US-A- 4 673 076
- US-A1- 2005 143 236

## Beschreibung

Die Erfindung betrifft eine Werkstückhaltevorrichtung zum Halten eines Werkstücks für eine Bearbeitung durch eine Bearbeitungsmaschine gemäß dem Oberbegriff des Anspruchs 1 sowie eine damit ausgestattete Bearbeitungsmaschine.

Die Bearbeitungsmaschine ist beispielsweise eine Fräsmaschine, Bohrmaschine oder Drehmaschine, die das Werkstück spanabhebend bearbeitet. Ferner kann die Bearbeitungsmaschine eine Montagemaschine sein. Das Werkstück, beispielsweise eine Kolbenstange bzw. ein Pleuel, wird von der Werkstückhaltevorrichtung während der Bearbeitung durch die Bearbeitungsmaschine gehalten. Die Werkstückhaltevorrichtung ist beispielsweise ein Werkstücktisch mit einer oder mehreren Werkstückaufnahmen, die in einen Arbeitsbereich der Bearbeitungsmaschine schwenkbar sind.

Eine derartige Werkstückhaltevorrichtung sowie eine damit ausgestattete Bearbeitungsmaschine geht aus EP 1 591 194 A2 hervor.

Die Werkstückaufnahmen müssen an den jeweiligen Werkstücktyp angepasst sein. Beispielsweise sind an der Werkstückhaltevorrichtung Anschlagstücke angeordnet, die die Werkstückaufnahme bilden und das Werkstück halten. Wenn ein anderer Werkstücktyp bearbeitet werden soll, muss entweder die gesamte Werkstückhaltvorrichtung ausgetauscht werden oder die Werkstückhaltevorrichtung muss umgerüstet werden, beispielsweise indem Halterungen ausgetauscht und/oder an anderer Stelle der Werkstückhaltevorrichtung montiert werden. Die Umrüstung ist aufwändig und teuer und führt zu Stillstandszeiten der Bearbeitungsmaschine.

Es ist daher die Aufgabe der vorliegenden Erfindung, eine flexible, an unterschiedliche Werkstücktypen anpassbare und ein zuverlässiges Halten eines Werkstücks ermöglichende Werkstückhaltevorrichtung sowie eine damit ausgestatte Bearbeitungsmaschine bereit zu stellen.

Zur Lösung der Aufgabe sind eine Werkstückhaltevorrichtung zum Halten eines Werkstücks gemäß der technischen Lehre des Anspruchs 1 sowie eine damit ausgestatte Bearbeitungsmaschine vorgesehen.

Für jeden Werkstücktyp, beispielsweise für unterschiedliche Typen von Kolbenstangen, sind unterschiedliche Typen von Wechselträgern vorgesehen, die leicht an der Trägereinrichtung anordenbar sind. Die Wechselträger werden in die Aufnahme eingeschoben und mittels der Fixieranordnung fixiert. Wenn nun ein anderes Werkstück bearbeitet werden soll, das beispielsweise eine andere Geometrie aufweist oder in einer anderen Lage bezüglich der Bearbeitungsmaschine positioniert werden soll, wird lediglich der Wechselträger getauscht, was sehr schnell vonstatten geht. Die Umrüstung der Werkstückhaltevorrichtung kann in kurzer Zeit realisiert werden. Prinzipiell wäre es zwar denkbar, dass das Werkstück an dem Wechselträger verbleibt, der dann eine Art Palette bildet. Zweckmäßigerweise verbleibt jedoch der Wechselträger an der Werkstückhaltevorrichtung, solange der jeweilige Wechselträger für weitere Werkstücke gebraucht wird, wohingegen das Werkstück ausgewechselt wird.

Die Linearführungsanordnung und die Fixieranordnung sind so angeordnet, dass sie den mindestens einen Wechselträger in Eckbereichen eines Kräftedreiecks an der Aufnahme halten. Dadurch wird ein Verkanten des Wechselträgers an der Aufnahme vermieden und zugleich der Wechselträger zuverlässig gehalten.

Die erfindungsgemäße Werkstückhalterung bildet vorteilhafterweise einen Bestandteil einer Bearbeitungsmaschine, beispielsweise einer Fräs-, Bohr-, Dreh- und/oder Montagemaschine, zur spanabhebenden und/oder trennende Bearbeitung des Werkstücks bzw. für Montagen an dem Werkstück.

Weitere vorteilhafte Ausgestaltungen der Erfindung ergeben sich aus den Unteransprüchen sowie der nachfolgenden Beschreibung.

Die Fixieranordnung klemmt den Wechselträger zweckmäßigerweise in der Fixierstellung. Dazu sind zweckmäßigerweise eine oder mehrere Federanordnungen vorgesehen. Besonders bevorzugt ist, wenn die Fixieranordnung den Wechselträger an der Aufnahme zentriert, sodass er in einer vorbestimmten Position an der Aufnahme angeordnet ist, was eine präzise Positionierung des Werkstückes an dem Werkstückträger ermöglicht. Beispielsweise enthält die Fixieranordnung eine oder mehrere kugelförmige und/oder konische Fixierflächen. Besonders bevorzugt ist, dass die Fixieranordnung mindestens einen zumindest teilweise kugelförmigen oder konischen Fixierkörper aufweist, der in eine korrespondierend geformte Fixieraufnahme eingreift, die entsprechend zumindest teilweise kalottenförmig bzw. konisch ist. Der Fixierkörper bildet vorteilhafterweise einen Bestandteil der Trägereinrichtung.

Die Fixieraufnahme, die beispielsweise trichterförmig oder pfannenartig ist, ist vorteilhafterweise an dem Werkstückträger angeordnet. Es versteht sich, dass auch das umgekehrte Prinzip möglich ist, das beispielsweise an dem Werkstückträger ein konischer oder kugelförmiger Fixierabschnitt angeordnet ist, der in eine entsprechende Fixieraufnahme an der Trägereinrichtung eingreift.

Die Fixieraufnahme enthält vorteilhafterweise eine Einschuböffnung zum seitlichen Einschieben des Fixierkörpers. Beispielsweise kann die Fixieraufnahme gabelartig einen Schaftabschnitt des Fixierkörpers umgreifen. Es versteht sich, dass auch ein stempelartiger Fixierkörper denkbar ist, der in eine bodenseitig geschlossene Fixieraufnahme eingreift und diese fixiert bzw. zentriert.

Der Schaftabschnitt durchgreift vorteilhafterweise eine Öffnung der Fixieraufnahme quer zur Einschubebene, sodass eine kugel- oder kegelförmig nach radial innen verlaufende Zentrierfläche, beispielsweise eine Konusumfangsfläche oder eine Kugelfläche, in der Fixierstellung an einer oder mehreren trichterförmig verlaufenden Zentrierflächen der Fixieraufnahme anliegt. Diese Zentrierfläche ist beispielsweise trichterförmig in Richtung der Öffnung der Fixieraufnahme.

Vorteilhafterweise hat die Fixieranordnung eine Auflagefläche zum Auflegen des Wechselträgers, insbesondere im Bereich der Fixieraufnahme, beispielsweise an deren Unterseite. Der Wechselträger, beispielsweise ein vorderer Abschnitt des Wechselträgers, ist vorteilhafterweise in der Fixierstellung zwischen den Fixierkörper und die Auflagefläche geklemmt.

Für dieses Klemmen ist vorteilhafterweise eine Federanordnung vorgesehen, die den Wechselträger in die Fixierstellung sozusagen drückt. Die Federanordnung hält den Fixierkörper vorteilhafterweise mit einer Fixierkraft im Klemmsitz in der Fixieraufnahme. Dazu ist beispielsweise eine Federanordnung vorgesehen, die sich einerseits an dem Fixierkörper und andererseits an der Trägereinrichtung abstützt und somit den Fixierkörper in die Fixieraufnahme drückt.

Prinzipiell kann die Fixieranordnung manuell gelöst werden. Vorteilhafterweise hat die Werkstückhaltevorrichtung aber einen Löseaktor zum Lösen der Fixieranordnung. Die Fixieranordnung wirkt beispielsweise gegen die Federkraft der Federanordnung. Der Löseaktor, beispielsweise ein hydraulischer, elektrischer oder pneumatischer Linearzylinder oder Drehantrieb, verstellt zum Lösen der Fixieranordnung den Fixierkörper in eine Lösestellung, bei der der Fixierkörper von der Fixieraufnahme entfernt ist und den Werkstückträger freigibt.

Die Linearführungsanordnung enthält vorteilhafterweise zwei Linearführungseinrichtungen zum Führen einander entgegengesetzter Seitenbereiche des Wechselträgers. Beispielsweise sind Vorsprünge oder Nuten an Seitenbereichen der Aufnahme vorgesehen, die mit entsprechenden Nuten und Vorsprüngen an dem Wechselträger zusammenwirken. Die Linearführungseinrichtungen sind vorteilhafterweise im Bereich einer Einschuböffnung der Aufnahme angeordnet. Zweckmäßig ist es, die Fixieranordnung an einem geschlossenen Endbereich der Aufnahme anzuordnen, so dass die eingangs genannte Dreipunktfixierung im Bereich eines Kräftedreiecks möglich ist. Besonders bevorzugt ist es, wenn die Fixieranordnung etwa im Bereich einer Symmetrieachse zwischen den beiden Linearführungseinrichtungen angeordnet ist.

Die Trägereinrichtung ist im Bereich der Aufnahme vorteilhafterweise plattenartig.

Ebenfalls plattenartig ist vorteilhafterweise ein Trägerteil des Wechselträgers. An dem Trägerteil sind Halterungen zur Bildung der Werkstückaufnahme vorteilhafterweise lösbar befestigbar. Somit ist auch der Werkstückträger an unterschiedliche Werkstücktypen anpassbar. Die Halterung enthält beispielsweise Anschlagstücke für das Werkstück, Auflageteile zum Auflegen des Werkstücks oder dergleichen. Besonders bevorzugt ist es, wenn eines oder mehrere der Anschlagstücke beweglich, insbesondere schwenkbar sind, so dass die jeweilige Halterung zwischen einer das Werkstück haltenden Haltestellung und einer Freigabestellung verstellbar ist, bei der das Werkstück von dem Wechselträger entnommen werden kann. Beispielsweise ist eine Federanordnung vorgesehen, die die Halterung in eine das Werkstück haltende bzw. klemmende Stellung vorspannt.

An dem Trägerteil, an einer oder mehreren Halterungen, zwischen den Halterungen oder dergleichen sind vorteilhafterweise Öffnungen, Ausnehmungen und Abstände vorhanden, so dass das Werkstück für eine Bearbeitung durch ein Werkzeug der Bearbeitungsmaschine zugänglich ist.

Die Trägereinrichtung ist vorteilhaft als eine Werkstückwechseleinrichtung mit mehreren Aufnahmen für erfindungsgemäße Werkstückhalter ausgestaltet. Die Trägereinrichtung enthält beispielsweise eine Werkstückschwenkanordnung an denen mehrere Aufnahmen zum auswechselbaren Befestigen erfindungsgemäßer Werkstückhalter vorhanden sind. Es versteht sich, dass auch Linearfördereinrichtungen, z.B. Transportketten, Förderbänder oder dergleichen, mit Hilfe des erfindungsgemäßen Werkstückträgers leicht an unterschiedliche Erfordernisse, insbesondere an unterschiedliche Werkstücktypen anpassbar sind. Die erfindungsgemäßen Werkstückträger sind dann z.B. in einer Reihenrichtung nebeneinander angeordnet.

Eine besonders bevorzugte Variante der Erfindung sieht einen Werkstücktisch vor, der um vorteilhafterweise eine Drehachse drehbar ist. Bei dem um eine zweckmäßigerweise senkrechte Drehachse drehbaren Werkstücktisch sind die Aufnahmen strahlförmig um die Drehachse angeordnet. Bei dem später im Ausführungsbeispiel beschriebenen Werkstücktisch sind beispielsweise vier Aufnahmen kreuzförmig zueinander orientiert. Es versteht sich, dass auch mehr oder weniger Aufnahmen, auch beispielsweise an einem Rundtisch oder dergleichen, möglich sind. Die Aufnahmen sind beispielsweise an mehreren Trägerplatten oder an einer einzigen Trägerplatte des Werkstücktisches angeordnet.

Bei der als Werkstückwechseleinrichtung ausgestalteten Trägereinrichtung ist es möglich, dass die Werkstücke beispielsweise von einer Beladestation zu einer Bearbeitungsstation und von dort weiter zu einer Entnahmestation gefördert, insbesondere geschwenkt werden können.

Ferner weist die Werkstückhaltevorrichtung zweckmäßigerweise eine Wechselstation auf, an der der mindestens eine Wechselträger gewechselt werden kann. An dieser Wechselstation befindet sich vorteilhafterweise der oben beschriebene Löseaktor.

Nachfolgend wird ein Ausführungsbeispiel der Erfindung anhand der Zeichnung erläutert. Es zeigen:

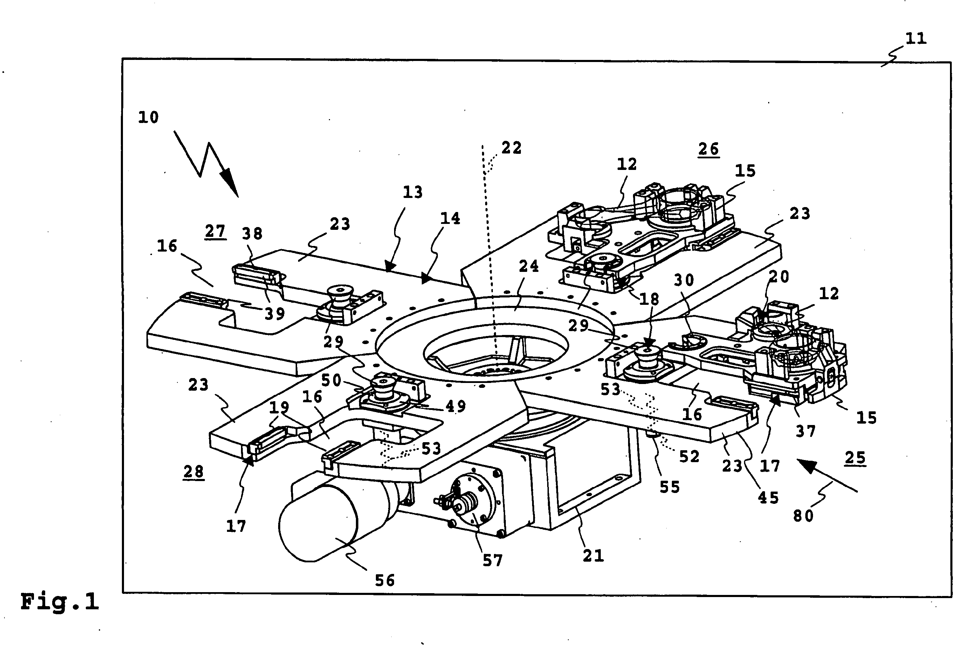

- Figur 1: eine perspektivische Gesamtansicht einer erfindungsgemäßen Werkstückhaltevorrichtung,

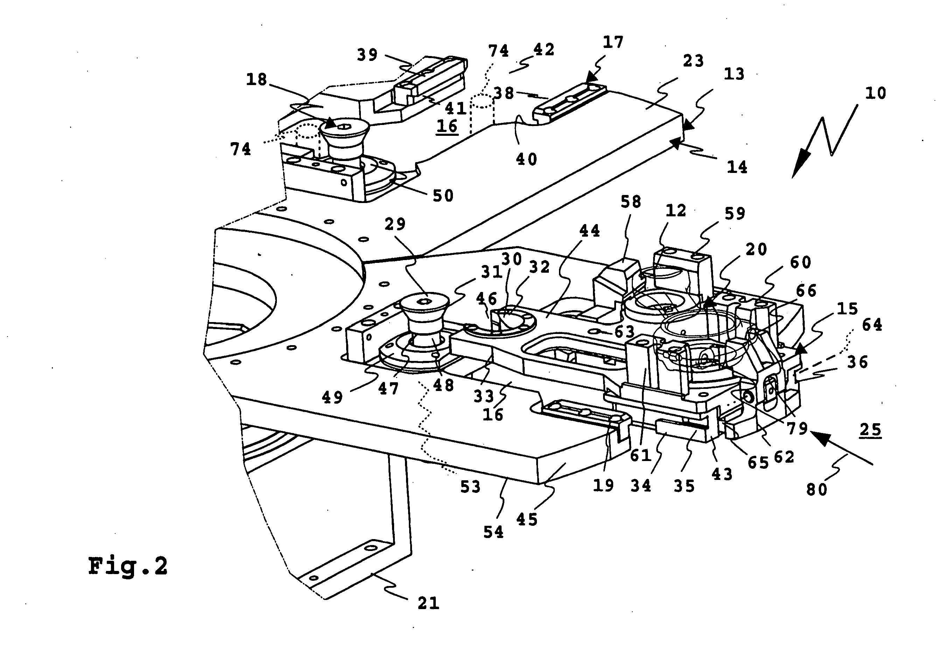

- Figur 2: eine Detailansicht aus Figur 1 mit einem teilweise aus einer Aufnahme entfernten und von hinten dargestellten Werkstückträger, und

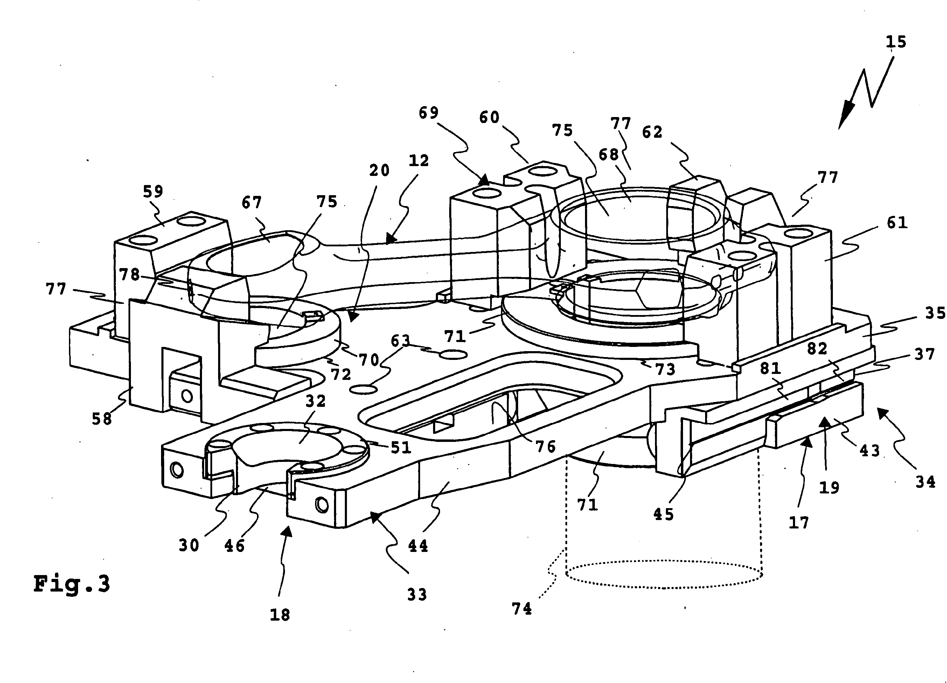

- Figur 3: den Werkstückträger gemäß Figuren 1 und 2 in einer perspektivischen Ansicht von vorn.

Eine Werkstückhaltevorrichtung 10 einer schematisch dargestellten Bearbeitungsmaschine 11, beispielsweise einer Dreh-, Fräs- und/oder Bohrmaschine, dient zum Halten von Werkstücken 12, beispielsweise Pleuelstangen eines Verbrennungsmotors während der Bearbeitung durch die Bearbeitungsmaschine 11. An einem Werkstücktisch 13 einer Trägereinrichtung 14 sind Werkstück-Wechselträger 15 auswechselbar befestigbar. Die Wechselträger 15 sind in der Art von Kassetten oder Schubladen in Aufnahmen 16 an der Trägereinrichtung 14 bzw. dem Werkstücktisch 13 einschiebbar.

Aus Gründen der Übersichtlichkeit ist das Werkstück 12 in der Zeichnung transparent dargestellt.

Durch die auswechselbaren Wechselträger 15 ist die Werkstückhaltevorrichtung 10 an unterschiedliche Werkstücktypen, z.B. Pleuel mit unterschiedlichen Maßen, leicht anpassbar. Die Wechselträger 15 werden von einer Linearführungsanordnung 17 geführt und in der jeweiligen Aufnahme 16 durch eine Fixieranordnung 18 fixiert. Somit wird der jeweilige Wechselträger 15 zuverlässig in der Aufnahme 16 gehalten. Zudem erfüllt die Fixieranordnung 18 die Aufgabe einer Zentriereinrichtung, weil sie den Wechselträger 15 in der Fixierstellung an der Aufnahme 16 zentriert. Somit ist ein Werkstück 12, das sich in einer Werkstückaufnahme 20 eines Wechselträgers 15 befindet, optimal für eine Bearbeitung durch die Bearbeitungsmaschine 11 positionierbar.

Der Werkstücktisch 13 ist an einem Basisteil oder Gestell 21 um eine Drehachse 22 drehbar. Die Aufnahmen 16 sind strahlförmig um die Drehachse 22 angeordnet. Die Aufnahmen 16 sind an Tischplatten 23 des Werkstücktisches 13 angeordnet. Die Tischplatten 23 sind beispielsweise an einem drehbar an dem Gestell 21 gelagerten Halter 24 angeschraubt.

Die Tischplatten 23 und somit die Aufnahmen 16 sind an dem Gestell 21 um die Drehachse 22 drehbar gelagert. In dem Gestell 21 kann ein nicht sichtbarer-Drehantrieb angeordnet sein.

Eine jeweilige Aufnahme 16 mit dem dort befindlichen Wechselträger 15 kann beispielsweise von einer Beladestation 25, wo der Wechselträger 15 mit einem Werkstück 12 bestückt wird, zu einer Bearbeitungsstation 26 geschwenkt werden, wo die Bearbeitungsmaschine 11 eine Montagearbeit an dem Werkstück 12 und/oder eine spanabhebende Bearbeitung des Werkstücks 12 vornimmt. Von der Bearbeitungsstation 26 schwenkt der Werkstücktisch 13 den Wechselträger 15 zu einer Entladestation 27 weiter, wo das Werkstück entnommen werden kann.

Ferner ist es möglich, den Werkstücktisch 13 zu einer Wechselstation 28 zu schwenken, wo die Wechselträger 15 entnommen und gegen andere erfindungsgemäße Wechselträger ersetzt werden können, um die Werkstückhaltevorrichtung 10 an andere Werkstücktypen anzupassen.

Die Funktionen der Stationen 25 bis 28 können auch anders sein, beispielsweise können mehrere Bearbeitungsstationen zur Bearbeitung durch die Bearbeitungsmaschine 11 vorgesehen sein.

Die Fixieranordnungen 18 klemmen den Wechselträger 15 in der Fixierstellung. Ein Fixierkörper 29 greift dabei in eine konische Fixieraufnahme 30 an einem Wechselträger 15 ein. Die Fixierkörper 29 bzw. die Fixieraufnahmen 30 sind konisch, d.h. an dem Fixierkörper 29 ist eine konische Zentrierfläche 31 vorhanden, die in der Fixierstellung bzw. Klemmstellung an einer trichterförmig verlaufenden Zentrierfläche 32 der Fixieraufnahme 30 anliegt.

Die Fixieraufnahmen 30 sind an vorderen Abschnitten 33 der Wechselträger 15 angeordnet und haben eine gabelartige Gestalt. An einem hinteren Abschnitt 34 der Wechselträger 15 sind an einander entgegengesetzten Seiten 35, 36 Nuten 37 angeordnet, in die Vorsprünge 38 an korrespondierenden Innenseiten 40, 41 der Aufnahmen 16 eingreifen. Die Vorsprünge 38 sind durch Gleitschienen 39 gebildet, die im Bereich einer Einschuböffnung 42 an der Aufnahme 16 angeordnet und beispielsweise mit Schrauben befestigt sind. Die Nuten 37 sind an Nutenstücken 43 vorhanden, die im Bereich der Seiten 35, 36 an ein Trägerteil 44 des jeweiligen Wechselträgers 15 angeschraubt sind.

Somit sind die Wechselträger 15 an den Aufnahmen 16 jeweils entlang einer Einschubebene 45 linear geführt und werden in der Fixierstellung von der Linearführungsanordnung 17 gehalten.

Zum leichteren Einführen der Nuten 37 in die Gleitschienen 39 ist ein vorderer Nutabschnitt 81 quer zur Einschubebene 45 aufgeweitet. Es versteht sich, dass auch eine Aufweitung des Nutabschnitts 81 im Wesentlichen in der Einschubebene 45 zweckmäßig sein kann. Ein hinterer Nutabschnitt 82 der Nut 37 hingegen ist so eng, dass die Gleitschienen 39 in der Einschubebene 45, d.h. vorliegend horizontal, an der Ober- und Unterseite der Gleitschienen 39 anliegen.

Die Fixieranordnung 18 wirkt auf den vorderen Abschnitt 33 eines jeweiligen Wechselträgers 15. Die Wechselträger 15 sind vorne offen, sodass die Fixierkörper 29 durch eine vordere Einschuböffnung 46 in die Fixieraufnahmen 30 einschiebbar sind.

Die Fixierkörper 29 sind an einem oberen Ende 47 eines Schaftabschnitts oder Schaftteils 48 angeordnet. Beispielsweise sind die Fixierkörper 29 auf die Schaftteile 48 geschraubt. Es versteht sich, dass auch eine einstückige Bauform möglich ist. Während die Fixieraufnahme 30 pfannenartig oder trichterartig nach oben offen ist, bilden die Fixierkörper 29 sozusagen das Gegenstück, d.h., die Zentrierfläche 31 verläuft vom freien Ende des Fixierkörpers 29 her gesehen nach radial innen bis zu dem Schaftabschnitt 48. Die Fixierkörper 29 wirken sozusagen wie Zuganker auf die Fixieraufnahmen 30.

Die Einschuböffnung 46 der Fixieraufnahme 30 erstreckt sich über einen Teilkreis von weniger als 180°, so dass der kegelförmige Fixierkörper 29 den Wechselträger 15 in der Einschubrichtung 80, in der der Wechselträger 15 in die Aufnahme 16 eingeschoben wird, fixieren und zentrieren kann. Die Einschuböffnung 46 ist lediglich so groß, dass das Schaftteil 48 bzw. der Schaftabschnitt 48 in die Fixieraufnahme 30 von vorn her eingeschoben werden kann.

Das Schaftteil 48 ist linear beweglich an einer Führung 49 gelagert. Somit ist der Fixierkörper 29 quer zur Einschubebene 45 beweglich und kann zwischen einer Lösestellung, bei der der Wechselträger 15 von der Aufnahme 16 entnommen werden kann, und einer Fixierstellung verstellt werden.

Die Führung 49 hat an ihrer Oberseite eine Auflagefläche 50 zum Auflegen des Wechselträgers 15, insbesondere eines vorn am Trägerteil 44 angeordneten Fixierteils 51, an dem die Fixieraufnahme 30 oberseitig ausgebildet ist.

Federanordnungen 52 spannen die Fixieranordnungen 18 in die Fixierstellung vor. Die Federanordnungen 52 enthalten beispielsweise eine Schraubenfeder 53, die zwischen die Unterseite 54 des Werkstücktischs 13 und einen Bund 55 an einem jeweiligen Schaftteil 48 gespannt ist. Dadurch ziehen die Federanordnungen 52 die Schaftteile 48 und die oberseitig dort angeordneten Fixierkörper 29 nach unten und klemmen die Wechselträger 15, insbesondere die Fixieraufnahmen 30 zwischen die Auflagefläche 50 und die Fixierkörper 29.

An der Wechselstation 28 können die Wechselträger 15 gewechselt werden. Ein Löseaktor 56 an der Wechselstation 28 verstellt die jeweils dorthin geschwenkte Fixieranordnung 18 in eine Lösestellung. Der Löseaktor 56, beispielsweise ein zweckmäßigerweise pneumatischer oder hydraulischer Linearantrieb oder ein Drehantrieb, der ein Getriebe zur Umsetzung einer Drehbewegung in eine Linearbewegung aufweist, drückt beispielsweise auf das untere Ende eines jeweiligen Schaftteils 48 und verstellt somit den Fixierkörper 29 an dessen Oberseite nach oben, so dass die Fixieranordnung 18 den Wechselträger 15 freigibt. Der Wechselträger 15 kann dann von einem Werker oder einem Roboter nach radial außen entlang der Einschubebene 45 von dem Werkstücktisch 13 entnommen werden.

Neben dem Löseaktor 56 befindet sich ein Anschluss 57 zum Anschließen eines Drehantriebs für den Werkstücktisch 13.

Die Aufnahmen 16 haben im vorliegenden Fall eine L-förmige Gestalt, wobei die Fixieranordnung 18 im Bereich eines Schnittpunktes der beiden L-Schenkel angeordnet ist.

An den plattenartigen Trägerteilen 44 der Werkstück-Wechselträger 15 sind Halterungen 58 bis 62 zum Halten des Werkstücks 12 angeordnet. Die Halterungen 58 bis 62 sind beispielsweise an das Trägerteil 44 angeschraubt oder an das Trägerteil 44 angesteckt. Nicht näher bezeichnete Bolzen sind durch Montagebohrungen 63 durchgesteckt und in die jeweilige Halterung 58 bis 62 eingeschraubt. Die Halterungen 58 bis 62 bilden seitliche Anschlagstücke 69 für das Werkstück 12. Die Halterungen 58 bis 62 sind beispielsweise Anschläge, Pratzen oder sonstige Fixierelemente zum Halten des Werkstücks 12.

Das Werkstück 12, im vorliegenden Falle eine Kolbenstange, liegt diagonal geklemmt und gehalten an den Halterungen 58 bis 62 an. Dabei sind die Halterungen 58, 59, einem kleinen Auge 67 zugeordnet. Die Halterungen 58, 59 sind über Eck angeordnet.

Die Halterungen 60 bis 62 sind einem großen Auge 68 des Werkstücks 12 zugeordnet. Die Halterungen 60 bis 62 sind U-förmig um das große Auge 68 angeordnet, wobei die Halterungen 61, 62 U-Schenkel bilden.

Die Halterung 62 ist eine Schwenkhalterung, die schwenkbar um eine Achse 64 an dem Trägerteil 44 angelenkt ist. Federelemente 65 spannen die Halterung 62 in eine das Werkstück 12 klemmende und haltende Haltestellung vor. Ein Anschlagabschnitt 66 der Halterung 62 kann im Sinne eines Öffnens der Werkstückaufnahme 20 nach außen geschwenkt werden, so dass das Werkstück 12 aus der Werkstückaufnahme 20 entnommen werden kann.

Das Werkstück liegt auf Auflageteilen 70, 71 auf, die an dem Trägerteil 44 zweckmäßigerweise auswechselbar befestigt sind. Das Auflageteil 70 ist dem kleinen Auge 67, das Auflageteil 71 dem großen Auge 68 zugeordnet. Die Auflageteile 70, 71 sind in Öffnungen 72, 73 des Trägerteils 44 eingesteckt. Insbesondere im Bereich der Bearbeitungsstation 26 können.in der Zeichnung schematisch angedeutete Stützen 74 vorhanden sein, auf denen die Auflageteile 70, 71 bei der Bearbeitung der Werkstücke 12 aufliegen. Dadurch werden die Wechselträger 15 von unten gestützt.

Die Auflageteile 70, 71 haben Durchgangsöffnungen 75, z.B. für ein die Augen 67, 68 bohrendes Werkzeug und/oder ein Montagewerkzeug, insbesondere ein Werkzeug zum Einbringen einer Gleithülse oder -buchse in eines der Augen 67 und/oder 68.

An dem Trägerteil 44 können weitere Öffnungen, beispielsweise eine Durchgangsöffnung 76, vorgesehen sein, die bei einer eventuellen andersartigen Bestückung des Trägerteils 44 mit Halterungen für Montagearbeiten an den Werkstücken 12 und/oder für eine insbesondere spanabhebende Bearbeitung der Werkstücke 12 erforderlich sind.

Zwischen den Halterungen 58, 59, den Halterungen 60 und 62 sowie 62 und 61 sind jeweils Abstände 77 vorhanden, die eine seitliche Bearbeitung des Werkstücks 12 ermöglichen. Beispielsweise sind die Abstände 77 groß genug, dass ein Bohrer zum Bohren eines Öllochs 78 in das kleine Auge 67 sowie zum Bohren von Montagebohrungen 79 seitlich am großen Auge 68 das Werkstück 12 bohren kann. Die Abstände 77 sind auch für eine Montagebearbeitung zweckmäßig, z.B. zum Einschrauben von Bolzen in das Werkstück 12, z.B. in die Montagebohrungen 79.

Es ist auch möglich, dass die Bearbeitungsmaschine 11, z.B. an der Bearbeitungsstation 26, eine trennende Bearbeitung des Werkstücks 12 durchführt, z.B. im Bereich des Auges 68 einen Deckel von dem Pleuel bzw. Werkstück 12 abtrennt, beispielsweise durch Anbringen einer Kerbe und anschließendem Abtrennen des Deckels im Rahmen eines sogenannten Crackens.

## Patentansprüche

1. Werkstückhaltevorrichtung (10) zum Halten eines Werkstücks (12) für eine Bearbeitung durch eine Bearbeitungsmaschine (11), mit einer Trägereinrichtung (14) und mindestens einem an der Trägereinrichtung (14) auswechselbar befestigbaren Werkstück-Wechselträger (15), der eine Werkstückaufnahme (20) zum Aufnehmen und Halten des Werkstücks (12) aufweist, wobei der mindestens eine Werkstück-Wechselträger (15) an einer Linearführungsanordnung (17) in der Art einer Schublade in eine Aufnahme (16) der Trägereinrichtung (14) in einer Einschubebene (45) einschiebbar und durch eine Fixieranordnung (18) in der Aufnahme (16) in einer Fixierstellung fixierbar ist, **dadurch gekennzeichnet, dass** die Linearführungsanordnung (17) und die Fixieranordnung (18) den mindestens einen Wechselträger (15) in Eckbereichen eines Kräftedreiecks an der Aufnahme (16) halten.

2. Werkstückhaltevorrichtung nach Anspruch 1, **dadurch gekennzeichnet, dass** die Fixieranordnung (18) den mindestens einen Wechselträger (15) an einem Eckbereich des Kräftedreiecks und die Linearführungsanordnung (17) an weiteren Eckbereichen des Kräftedreiecks an der Aufnahme (16) halten.

3. Werkstückhaltevorrichtung nach Anspruch 1 oder 2, **dadurch gekennzeichnet, dass** die Fixieranordnung (18) den mindestens einen Wechselträger (15) in der Fixierstellung klemmt.

4. Werkstückhaltevorrichtung nach einem der vorhergehenden Ansprüche, **dadurch gekennzeichnet, dass** die Fixieranordnung (18) den mindestens einen Wechselträger (15) an der Aufnahme (16) zentriert.

5. Werkstückhaltevorrichtung nach einem der vorhergehenden Ansprüche, **dadurch gekennzeichnet, dass** die Fixieranordnung (18) mindestens einen zumindest teilweise kugelförmigen oder konischen Fixierkörper (29) aufweist, der in eine korrespondierend zumindest teilweise kalottenförmige oder konische Fixieraufnahme (30) eingreift.

6. Werkstückhaltevorrichtung nach Anspruch 5, **dadurch gekennzeichnet, dass** die Fixieraufnahme (30) eine Einschuböffnung (46) zum seitlichen Einschieben des Fixierkörpers (29) aufweist.

7. Werkstückhaltevorrichtung nach Anspruch 5 oder 6, **dadurch gekennzeichnet, dass** ein Schaftabschnitt (48) des Fixierkörpers (29) eine Öffnung der Fixieraufnahme (30) quer zu der Einschubebene (45) durchgreift, so dass mindestens eine zu dem Schaftabschnitt (48) kugel- oder kegelförmig nach radial innen verlaufende Zentrierfläche (31) des Fixierkörpers (29) in der Fixierstellung an einer trichterförmig zu der Öffnung der Fixieraufnahme (30) hin verlaufenden Zentrierfläche (32) der Fixieraufnahme (30) anliegt.

8. Werkstückhaltevorrichtung nach einem der vorhergehenden Ansprüche, **dadurch gekennzeichnet, dass** die Fixieranordnung (18) eine Auflagefläche (50) zum Auflegen des Wechselträgers (15) aufweist, und dass der mindestens eine Wechselträger (15), insbesondere ein vorderer Abschnitt (33) des mindestens einen Wechselträgers (15), in der Fixierstellung zwischen den Fixierkörper (29) und die Auflagefläche (50) geklemmt ist.

9. Werkstückhaltevorrichtung nach einem der vorhergehenden Ansprüche, **dadurch gekennzeichnet, dass** die Fixieranordnung (18), insbesondere der Fixierkörper (29), in die Fixierstellung vorgespannt ist, insbesondere durch eine Federanordnung (52).

10. Werkstückhaltevorrichtung nach einem der vorhergehenden Ansprüche, **dadurch gekennzeichnet, dass** sie einen Löseaktor (56) zum Lösen der Fixieranordnung (18) aufweist.

11. Werkstückhaltevorrichtung nach einem der vorhergehenden Ansprüche, **dadurch gekennzeichnet, dass** die Linearführungsanordnung (17) zwei Linearführungseinrichtungen (19) zum Führen einander entgegengesetzter Seitenbereiche (35, 36) des mindestens einen Wechselträgers (15) aufweist.

12. Werkstückhaltevorrichtung nach Anspruch 11, **dadurch gekennzeichnet, dass** die Linearführungseinrichtungen (19) Vorsprünge (38), insbesondere Gleitschienen (39), an der Aufnahme (16) und/oder dem mindestens einen Wechselträger (15) umfassen, die in Nuten (37) an dem mindestens einen Wechselträger (15) oder der Aufnahme (16) eingreifen.

13. Werkstückhaltevorrichtung nach Anspruch 11 oder 12, **dadurch gekennzeichnet, dass** die Linearführungseinrichtungen (19) im Bereich einer Einschuböffnung (42) der Aufnahme (16) und die Fixieranordnung (18) im geschlossenen Endbereich der Aufnahme (16) angeordnet sind.

14. Werkstückhaltevorrichtung nach einem der vorhergehenden Ansprüche, **dadurch gekennzeichnet, dass** die Trägereinrichtung (14) im Bereich der Aufnahme (16) plattenartig ist.

15. Werkstückhaltevorrichtung nach einem der vorhergehenden Ansprüche, **dadurch gekennzeichnet, dass** der mindestens eine Wechselträger (15) ein insbesondere plattenartiges Trägerteil (44) aufweist.

16. Werkstückhaltevorrichtung nach Anspruch 15, **dadurch gekennzeichnet, dass** an dem Trägerteil (44) des mindestens einen Wechselträgers (15) mindestens eine Halterung (58-62) zur Bildung der Werkstückaufnahme (20) lösbar befestigbar ist.

17. Werkstückhaltevorrichtung nach Anspruch 15 oder 16, **dadurch gekennzeichnet, dass** die mindestens eine Halterung (58-62) mindestens ein Anschlagstück (69) für das Werkstück (12) und/oder mindestens ein Auflageteil (70, 71) zum Auflegen des Werkstücks enthält.

18. Werkstückhaltevorrichtung nach einem der Ansprüche 15 bis 17, **dadurch gekennzeichnet, dass** an dem Trägerteil (44) und/oder der mindestens einen Halterung (58-62) eine Öffnung (75, 76) oder eine Ausnehmung oder ein Abstand (77) für ein Werkzeug zur Bearbeitung des Werkstücks (12) vorhanden ist.

19. Werkstückhaltevorrichtung nach einem der vorhergehenden Ansprüche, **dadurch gekennzeichnet, dass** die Trägereinrichtung (14) einen Werkstücktisch (13) und/oder eine Linearfördereinrichtung und/oder eine Werkstück-Schwenkanordnung mit mehreren Aufnahmen (16) zum auswechselbaren Befestigen des mindestens einen Werkstück-Wechselträgers (15) aufweist.

20. Werkstückhaltevorrichtung nach Anspruch19, **dadurch gekennzeichnet, dass** der Werkstücktisch (13) um eine insbesondere im wesentlichen senkrechte Drehachse (22) drehbar ist, und dass die Aufnahmen (16) strahlförmig um die Drehachse (22) angeordnet sind.

21. Bearbeitungsmaschine mit einer Werkstückhaltevorrichtung (10) nach einem der vorhergehenden Ansprüche.

22. Bearbeitungsmaschine nach Anspruch 21, **dadurch gekennzeichnet, dass** sie eine Montagemaschine für Montagen an dem Werkstück und/oder eine Bearbeitungsmaschine zum Abtrennen von Teilen des Werkstücks (12) und/oder eine Bearbeitungsmaschine zur spanabhebenden Bearbeitung des Werkstücks (12) ist.

## Claims

1. Work holding fixture (10) for holding a workpiece (12) for machining by a machining centre (11), with a support fixture (14) and at least one work changeover support (15), interchangeably attachable to the support fixture (14) and with a work holder (20) to accommodate and hold the workpiece (12), wherein the work changeover support or supports (15) may be inserted in an insertion plane (45) on a linear guidance unit (17) in the form of a drawer in a slot (16) of the support fixture (14), and located by means of a locating assembly (18) in a located position in the slot (16), **characterised in that** the linear guidance unit (17) and the locating assembly (18) hold the changeover support or supports (15) in the slot (16) in corner zones of a triangle of forces.

2. Work holding fixture according to claim 1, **characterised in that** the locating assembly (18) holds the changeover support or supports (15) at one corner zone of the triangle of forces, and the linear guidance unit (17) in the slot (16) at other corner zones of the triangle of forces.

3. Work holding fixture according to claim 1 or 2, **characterised in that** the locating assembly (18) clamps the changeover support or supports (15) in the located position.

4. Work holding fixture according to any of the preceding claims, **characterised in that** the locating assembly (18) centres the changeover support or supports (15) in the slot (16).

5. Work holding fixture according to any of the preceding claims, **characterised in that** the locating assembly (18) has one or more at least partly spherical or conical locating bodies (29) which engage in a corresponding, at least partly flat-dome-shaped or conical, locating socket (30).

6. Work holding fixture according to claim 5, **characterised in that** the locating socket (30) has an insertion orifice (46) for inserting the locating body (29) from the side.

7. Work holding fixture according to claim 5 or 6, **characterised in that** a shank section (48) of the locating body (29) passes through an orifice of the locating socket (30) at right-angles to the insertion plane (45), so that at least one spherical or conical centring face (31) of the locating body (29) running radially inwards to the shank section (48) fits up in the located position against a centring face (32) of the locating socket (30) running in a funnel shape towards the opening of the locating socket (30).

8. Work holding fixture according to any of the preceding claims, **characterised in that** the locating assembly (18) has a locating surface (50) for placing of the changeover support (15), and that the changeover support or supports (15), in particular a front section (33) of the changeover support or supports (15), is/are clamped in the located position between the locating body (29) and the locating surface (50).

9. Work holding fixture according to any of the preceding claims, **characterised in that** the locating assembly (18), in particular the locating body (29), is tensioned in the located position, in particular by a spring assembly (52).

10. Work holding fixture according to any of the preceding claims, **characterised in that** it has a release actuator (56) to release the locating assembly (18).

11. Work holding fixture according to any of the preceding claims, **characterised in that** the linear guidance unit (17) has two linear guidance fixtures (19) for guiding opposite side areas (35, 36) of the changeover support or supports (15).

12. Work holding fixture according to claim 11, **characterised in that** the linear guidance fixtures (19) comprise projections (38), in particular slide rails (39) on the slot (16) and/or the changeover support or supports (15), which engage in grooves (37) on the changeover support or supports (15) or the slot (16).

13. Work holding fixture according to claim 11 or 12, **characterised in that** the linear guidance fixtures (19) are provided in the area of an insertion orifice (42) of the slot (16), and the locating assembly (18) in the closed end area of the slot (16).

14. Work holding fixture according to any of the preceding claims, **characterised in that** the support fixture (14) is plate-like in the area of the slot (16).

15. Work holding fixture according to any of the preceding claims, **characterised in that** the changeover support or supports (15) have a support section (44), in particular plate-like.

16. Work holding fixture according to claim 15, **characterised in that** one or more mounts (58-62) to form the work holder (20) are releasably attachable to the support section (44) of the changeover support or supports (15).

17. Work holding fixture according to claim 15 or 16, **characterised in that** the mount or mounts (58-62) contain at least one stop element (69) for the workpiece (12) and/or at least one locating section (70, 71) for the placing of the workpiece.

18. Work holding fixture according to any of claims 15 to 17, **characterised in that** an opening (75, 76) or a recess or a space (77) for a tool for machining the workpiece (12) is provided on the support section (44) and/or the mount or mounts (58-62).

19. Work holding fixture according to any of the preceding claims, **characterised in that** the support fixture (14) has a worktable (13) and/or a linear conveyor and/or a workpiece swivelling assembly with several slots (16) for interchangeable attachment of the work changeover support or supports (15).

20. W- according to claim 19, **characterised in that** the worktable (13) is rotatable around an axis of rotation (22), substantially vertical, and that the slots (16) are arranged radiating around the axis of rotation (22).

21. Machining centre with a work holding fixture (10) according to any of the preceding claims.

22. Machining centre according to claim 21, **characterised in that** it is an assembling machine for attaching fittings to the workpiece and/or a machining centre for removing parts from the workpiece (12) and/or a machining centre for removal of chips from the workpiece (12).

## Revendications

1. Dispositif porte-pièce (10) servant à maintenir une pièce (12) pour un usinage par une machine d'usinage (11) et équipé d'un dispositif support (14) et d'au moins un porte-pièce échangeable (15) qui peut être fixé de manière interchangeable au niveau du dispositif support (14) et qui présente un logement de pièce (20) pour la réception et le maintien de la pièce (12), l'au moins un porte-pièce échangeable (15) pouvant être inséré au niveau d'un système de guidage linéaire (17) dans un plan d'insertion (45) dans un logement (16) du dispositif support (14) à la manière d'un tiroir et pouvant être fixé dans une position de fixation dans le logement (16) par un système de fixation (18), **caractérisé en ce que** le système de guidage linéaire (17) et le système de fixation (18) maintiennent l'au moins un porte-pièce échangeable (15) dans les zones d'angle d'un triangle des forces au niveau du logement (16).

2. Dispositif porte-pièce selon la revendication 1, **caractérisé en ce que** le système de fixation (18) maintient l'au moins un porte-pièce échangeable (15) au niveau d'une zone d'angle du triangle des forces et le système de guidage linéaire (17) le maintient dans d'autres zones d'angle du triangle des forces au niveau du logement (16).

3. Dispositif porte-pièce selon la revendication 1 ou 2, **caractérisé en ce que** le système de fixation (18) serre l'au moins un porte-pièce échangeable (15) dans la position de fixation.

4. Dispositif porte-pièce selon l'une des revendications précédentes, **caractérisé en ce que** le système de fixation (18) centre l'au moins un porte-pièce échangeable (15) au niveau du logement (16).

5. Dispositif porte-pièce selon l'une des revendications précédentes, **caractérisé en ce que** le système de fixation (18) présente au moins un corps de fixation (29) au moins partiellement sphérique ou conique qui s'engage dans un logement de fixation (30) correspondant au moins partiellement en forme de calotte ou de cône.

6. Dispositif porte-pièce selon la revendication 5, **caractérisé en ce que** le logement de fixation (30) présente une ouverture d'insertion (46) servant à l'insertion latérale du corps de fixation (29).

7. Dispositif porte-pièce selon la revendication 5 ou 6, **caractérisé en ce qu'**une section de tige (48) du corps de fixation (29) pénètre dans une ouverture du logement de fixation (30) transversalement au plan d'insertion (45) si bien qu'au moins une surface de centrage (31) du corps de fixation (29) s'étendant radialement vers l'intérieur en forme de sphère ou de cône vers la section de tige (48) s'appuie dans la position de fixation contre une surface de centrage (32) du logement de fixation (30) s'étendant en forme d'entonnoir vers l'ouverture du logement de fixation (30).

8. Dispositif porte-pièce selon l'une des revendications précédentes, **caractérisé en ce que** le système de fixation (18) présente une surface d'appui (50) servant à poser le porte-pièce échangeable (15), et **en ce que** l'au moins un porte-pièce échangeable (15), en particulier une section avant (33) de l'au moins un porte-pièce échangeable (15), est serré dans la position de fixation entre le corps de fixation (29) et la surface d'appui (50).

9. Dispositif porte-pièce selon l'une des revendications précédentes, **caractérisé en ce que** le système de fixation (18), en particulier le corps de fixation (29), est précontraint dans la position de fixation, en particulier par un ensemble à ressort (52).

10. Dispositif porte-pièce selon l'une des revendications précédentes, **caractérisé en ce qu'**il présente un actionneur de désolidarisation (56) permettant de désolidariser le système de fixation (18).

11. Dispositif porte-pièce selon l'une des revendications précédentes, **caractérisé en ce que** le système de guidage linéaire (17) présente deux dispositifs de guidage linéaire (19) permettant le guidage de zones latérales (35, 36) opposées l'une à l'autre de l'au moins un porte-pièce échangeable (15).

12. Dispositif porte-pièce selon la revendication 11, **caractérisé en ce que** les dispositifs de guidage linéaire (19) comprennent des saillies (38), en particulier des glissières (39), au niveau du logement (16) et/ou de l'au moins un porte-pièce échangeable (15), qui s'engagent dans les rainures (37) au niveau de l'au moins un porte-pièce échangeable (15) ou au niveau du logement (16).

13. Dispositif porte-pièce selon la revendication 11 ou 12, **caractérisé en ce que** les dispositifs de guidage linéaire (19) sont situés au niveau d'une ouverture d'insertion (42) du logement (16) et le système de fixation (18) est situé dans la zone d'extrémité fermée du logement (16).

14. Dispositif porte-pièce selon l'une des revendications précédentes, **caractérisé en ce que** le dispositif support (14) est en forme de plaque au niveau du logement (16).

15. Dispositif porte-pièce selon l'une des revendications précédentes, **caractérisé en ce que** l'au moins un porte-pièce échangeable (15) présente un élément support (44) en particulier en forme de plaque.

16. Dispositif porte-pièce selon la revendication 15, **caractérisé en ce qu'**au moins une bride de support (58-62) permettant de former le logement de pièce (20) peut être fixée de manière amovible au niveau de l'élément support (44) de l'au moins un porte-pièce échangeable (15).

17. Dispositif porte-pièce selon la revendication 15 ou 16, **caractérisé en ce que** l'au moins une bride de support (58-62) comporte au moins une butée (69) pour la pièce (12) et/ou au moins un élément d'appui (70, 71) pour poser la pièce.

18. Dispositif porte-pièce selon l'une des revendications 15 à 17, **caractérisé en ce qu'**il est prévu une ouverture (75, 76) ou un évidement ou un espacement (77) au niveau de l'élément support (44) et/ou de l'au moins une bride de support (58-62) destiné(e) à un outil d'usinage de la pièce (12).

19. Dispositif porte-pièce selon l'une des revendications précédentes, **caractérisé en ce que** le dispositif support (14) présente un plateau porte-pièce (13) et/ou un système de guidage linéaire et/ou un système de pivotement de pièce avec plusieurs logements (16) pour la fixation interchangeable de l'au moins un porte-pièce échangeable (15).

20. Dispositif porte-pièce selon la revendication 19, **caractérisé en ce que** le plateau porte-pièce (13) peut tourner autour d'un axe de rotation (22) en particulier sensiblement vertical et **en ce que** les logements (16) sont disposés en rayons autour de l'axe de rotation (22).

21. Machine d'usinage équipée d'un dispositif porte-pièce (10) selon l'une des revendications précédentes.

22. Machine d'usinage selon la revendication 21, **caractérisée en ce qu'**il s'agit d'une machine de montage pour les montages au niveau de la pièce et/ou d'une machine d'usinage pour le tronçonnage de parties de la pièce (12) et/ou d'une machine d'usinage pour l'usinage de la pièce (12) par enlèvement de copeaux.
